(19) Europäisches Patentamt
European Patent Office
Office européen des brevets

(11) **EP 2 851 647 B1**

(12) **EUROPEAN PATENT SPECIFICATION**

(45) Date of publication and mention
of the grant of the patent:
**17.05.2017 Bulletin 2017/20**

(51) Int Cl.:
*F41H 11/02* (2006.01)          *G01S 13/87* (2006.01)
*G01S 13/58* (2006.01)

(21) Application number: **14184711.1**

(22) Date of filing: **15.09.2014**

(54) **Microwave system with enhanced capability to detect, identify and localize moving targets**

Mikrowellensystem mit erweiterter Detektions-, Identifizierungs- und Lokalisierungsfähigkeit von beweglichen Zielen

Systeme a micro-ondes a capacité améliorée pour la détection, identification et localisation des cibles mouvantes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2013 CZ 20130714**

(43) Date of publication of application:
**25.03.2015 Bulletin 2015/13**

(73) Proprietor: **Czech Technical University in Prague 16627 Praha 6 (CZ)**

(72) Inventor: **Hudec, Premysl**
**150 19 Praha 5 (CZ)**

(74) Representative: **Duskova, Hana**
**Czech Technical University in Prague**
**Patent Centre**
**Zikova 4**
**166 36 Praha 6 (CZ)**

(56) References cited:
**EP-A1- 1 467 171     EP-A1- 1 605 225**
**CZ-B6- 303 331       FR-A1- 2 863 055**

• **PREMYSL HUDEC ET AL: "Microwave radar sensors for active defense systems", RADAR CONFERENCE, 2009. EURAD 2009. EUROPEAN, IEEE, PISCATAWAY, NJ, USA, 30 September 2009 (2009-09-30), pages 581-584, XP031558450, ISBN: 978-1-4244-4747-3**

## Description

Background of the Invention

Presented solution deals with a contactless microwave device capable of detecting, localizing or identifying moving targets, such as missiles threatening military vehicles, featuring the option to perform the functions mentioned above simultaneously.

Description of Prior Art

Military vehicles of various types belong to the most vulnerable military targets, including vehicles with very good armoring. The reason is the existence of a large number of efficient missiles capable to break through even very strong armoring. Therefore, the highest possible level of protection against threatening missiles belongs among the most important features of any combat vehicle.

In addition to increasing the armor thickness and quality, the attention in about the last 10 years has been focused on so-called active protection. The principle of active protection is to detect flying threatening missile and to activate certain form of counter-missile, which is capable to destroy such threatening missile or at least to significantly reduce its impacts. Most active protection means are based on a sensor or group of sensors capable to detect flying threatening missiles and to generate actuation signals, which activate counter-missiles. Due to their resistance to rain and dust, sensors used for military purposes are very often developed and implemented using the microwave technology, usually based on radar principle.

Examples of radar sensors used for the active protection of military vehicles are described in patent CZ303331 and in the article [PREMYSL HUDEC ET AL: "Microwave Radar Sensors for Active Defense Systems", RADAR CONFERENCE, 2009]. The sensor system, according to CZ303331, is based on the principle of a microwave barrier formed by an electromagnetic field focused approximately to a declined plane surrounding the protected combat vehicle, while the system is capable of detecting a threatening missile flying through such plane. Such simple microwave barrier can be built using the radar sensors able to detect the fly-by of threatening missiles. Such sensors are equipped with antennas featuring narrow radiation patterns in the vertical plane and wide in the horizontal plane. If a threatening missile enters the space covered by the radiation patterns of the implemented antennas, at the outputs of the connected radar sensors will appear electric signals proportionate to the reflection from the target and the Doppler shift given by the target's movement, which can be exploited to implement multiple functions of the active protection system. First of all, simple microwave barrier designed in this way is capable to detect the fly-by of a missile through the area defined by the antennas' radiation patterns. As such, it can be used for the counter-missiles actuation. If the threatening missile is detected by multiple neighbouring radar sensors, its position in the horizontal plane can be calculated. The calculation can be made on the basis of measured Doppler frequencies using the method described in the patent CZ303331, or based on the measurements of distances. The sensor system is therefore capable to calculate the threatening missile's estimated point-of-impact to the vehicle, to activate suitable counter-missile and fire it in the desired direction. The sensor system also allows to perform certain level of identification of the approaching missile. If the missile flies through the whole radiation patterns of installed antennas, the recorded signals represent to a large extent a specific "stamp" in the time-frequency level. For instance, this allows to distinguish small relatively harmless projectiles from significantly longer threatening missiles.

Nonetheless, the concept of a simple microwave barrier described in the patent CZ303331 has also certain setbacks. The major setback is that it cannot perform multiple functions described above simultaneously. For instance, if the simple microwave barrier is used for the counter-missiles actuation, due to the limited time available they are usually actuated immediately when the tip of the threatening missile enters the antennas' radiation pattern. Considering the high velocity of the threatening missiles, which is typically 150-1000 m/s, it is not viable to simultaneously perform the missile's position calculation. If the time needed to calculate the missile's position was for example 1 ms, which is quite realistic time offering the accuracy of the Doppler frequency measurements of approx. 1 kHz, it would mean that during the calculation the missile travels a distance of 15 to 100 cm, which in most cases will mean a devastating contact with the vehicle. Certain complications are further connected with the actuation signals generation as such. As already mentioned above, the simple microwave barrier according to the patent CZ303331 operates on the principle that when the threatening missile enters the space defined by the antennas' radiation patterns, at the outputs of connected radar sensors will appear signals proportionate to the reflection from the target and to the Doppler shift given by the target's movement. But when a threatening missile flies into the antennas radiation patterns, the signal amplitude has an increasing course at first; therefore, generation of actuation signals may be defined in such a way that the signal processor generates the actuation impulse, if the voltage at the output of the microwave barrier exceeds certain defined threshold.

Nevertheless, such threshold-based approach is problematic, since the amplitude of the signal at the output of the microwave barrier depends to a large extent on the distance between the radar sensor antennas and the threatening missile, it means on how high the missile flies above the ground. If the combat vehicle to be protected is 2.5 m high, the range of the output signal amplitudes may vary by up to 15 dB, which means that the fixed set threshold will lead to a non-negligibly varied timing of the counter-missile firing. If the applied radar sensors allow to measure distance, the issue can be compensated to a certain extent, however given the threatening missiles velocities it is quite likely that there will be just a limited time only for such compensation and therefore it can be in fact unviable.

In theory, the configuration according to the patent CZ303331 also allows to identify the threatening missiles. As already mentioned above, if it is possible to let the missile fly through the antennas' radiation patterns in the whole scope, the specific "stamp", given by the simple microwave barrier signals time progression, or possibly also by the corresponding spectrogram, can be recorded. When however the simple microwave barrier is used for generation of actuation signals, which is usually its main function, it is not possible to allow the threatening missile to fly through the whole space defined by the antennas' radiation patterns. As a result, identification of the threatening missiles in such configuration is not viable.

Several examples of radar sensors used for the active protection of military vehicles are also described in the article [PREMYSL HUDEC ET AL: "Microwave Radar Sensors for Active Defense Systems", RADAR CONFERENCE, 2009]. In addition to the simple microwave barrier, two other sensors applied to similar protective means are mentioned. The first, a lidar, is a sort of optical sensor. In the given configuration, its main potential advantage lies in its capability to localize the concerned targets with high precision and resolution. However, performed practical tests also indicated they have a high susceptibility to dust or rain which is unacceptable for the given application. The second is a microwave segment radar which, in comparison with the simple microwave barrier, has a substantially longer detection range reaching from tens to hundreds of meters, with the capability of monitoring wider spatial segments, i.e., it is wider in both azimuth and elevation ranges. The azimuth range of the segment radar can extend up to 360°, while the elevation range must correspond to the expected elevations of the threatening missile trajectories. The main task of the segment radar is to monitor more distanced surroundings of the protected military vehicle and prepare the active protection system for the arrival of any threatening missile. These are crucial functions, but the segment radar is not capable of performing all necessary tasks in the configuration concerned as it is not applicable for either closer target identification nor for venerating actuation signals. These are the principal roles of the microwave barrier in the solution described in the related article.

Setbacks of the solution described in the article in concern are similar to those of the solution according to patent CZ303331. The simple microwave barrier used in this configuration can generate actuation signals and identify targets, though it cannot conduct these two functions simultaneously. Practical tests also indicate the simple microwave barrier is not sufficiently precise in terms of actuation signal timing. As mentioned above, the primary reason is that the amplitude of simple microwave barrier signals vary to a significant degree with height of flight of the target above ground. This complicates subsequent threshold-based signal processing and leads to parasitic actuation time variations. Tests confirm these variations inversely influence active protection efficiency and reliability.

Summary of the Invention

Disadvantages mentioned above are removed by microwave system with enhanced capability to detect, identify and localize moving targets according to the presented solution. Similarly to the solution described both in CZ303331 and in the article [PREMYSL HUDEC ET AL: "Microwave Radar Sensors for Active Defense Systems", RADAR CONFERENCE, 2009], the system consists of at least one radar sensor equipped with the first antenna system formed by the transmitting and receiving antennas or with common antenna for both the receiver and transmitter, which either are a part of the radar sensor, or they are connected to it by coaxial cable or cables. This radar sensor consists of the microwave transmitter and the microwave receiver. Radar sensors are sensors having at their analogue low-frequency or digital outputs the information about the amplitude of the received signal reflected from the missile and about the frequency equal to the Doppler shift of the received signal frequency relative to the transmitted signal frequency. Radar sensors' antennas feature narrow radiation patterns in the vertical plane and wide in the horizontal plane and they are located above the protected part of the vehicle at height that is higher than the height of the protected part of the given vehicle. These antennas are directed in such a way that their radiation patterns' axes in the vertical plane are inclined under the angle ($\alpha_z$) ranging from 20° to 70° relative to the vertical line passing through the side of the vehicle's protected part in the place where the antennas of the given radar sensor are located. Also, the radiation patterns' axes in the horizontal plane at this place form an angle ($\varepsilon$) with the vehicle's side ranging from 20° to 160°. The number and locations of radar sensors above the protected part of the vehicle is selected such that the radiation patterns of their respective antennas in the horizontal plane partially overlap. Thus created setup forms the main microwave barriers where the output of each radar sensor is connected either directly, if it is a digital output, or via corresponding A/D converter, if it is an analogue low-frequency output, to digital processing unit. Principle of the new solution is that each main microwave barrier is complemented with microwave pre-barrier formed by the second radar sensors equipped with the second antenna systems.

Each pair forms a dual microwave barrier where antennas of the microwave pre-barrier radar sensors feature also the radiation patterns narrow in the vertical plane and wide in the horizontal plane and they are directed in such a way that the second antenna system radiation patterns' axes in the vertical plane are inclined under the angle ($\alpha_p$) by 10° to 30° greater than the value of the angle ($\alpha_z$), however always smaller than 90°, while simultaneously the second antenna system radiation pattern's axes in the horizontal plane form with the vehicle's side also the angle ($\varepsilon$) ranging from 20° to 160°. The number and locations of segments created in this way above the protected part of the vehicle is selected such that the radiation patterns of their respective antennas in the horizontal plane partially overlap. Analogically as the outputs of all radar sensors of the main microwave barrier, the outputs of all microwave pre-barrier radar sensors are connected based on their characteristics either directly, or via A/D converters to the inputs of the data processing unit. Input of this data processing unit is formed by chains of software blocks where the number of these chains corresponds to a double of the segments formed by the main microwave barrier and the microwave pre-barrier. These chains consist of the data preparation blocks followed by the fast Fourier transformation blocks. Output of each of the fast Fourier transformation block is connected to the buffer memory both directly, also via the Doppler frequencies and amplitudes block, and also via the distance calculation block. The buffer memory is then connected with the assessment and counter-missile activation block via blocks connected in parallel, where these blocks include the software block for the threatening missiles identification, software block for the threatening missiles parameters calculation and software block for actuation signals generation that is connected to the assessment and counter-missile activation block.

In one preferred embodiment the antennas radiation patterns' axes of the first antenna system in the vertical plane are inclined under the angle ($\alpha_z$) of 45° relative to the vertical line passing through the side of the vehicle's protected part in the place where the antenna of the given radar sensor is located. Also, the radiation patterns' axes in the horizontal plane of both the main microwave barrier and the microwave pre-barrier antennas at this place form with the vehicle's side an angle $\varepsilon$ =90°.

In another preferred embodiment the microwave transmitter and receiver of the microwave pre-barrier work on the operating frequency ($f_p$) and the microwave transmitter and receiver of the main barrier work on the operating frequency ($f_z$) different from the frequency ($f_p$). The outputs of the microwave pre-barrier transmitter and the main barrier transmitter are combined via the first combining/splitting circuit into a single transmitting antenna AFZM featuring the frequency dependence of the radiation patterns' maximums. Inputs of the microwave pre-barrier receiver and the main barrier receiver are connected to the outputs of the second combining/splitting circuit, the input of which is connected to the single receiving antenna AFZM featuring the frequency dependence of the radiation patterns' maximums. The modification in this embodiment is that the output of the first combining/splitting circuit of the transmitting block and the input of the second combining/splitting circuit of the receiving block are via the antenna combiner combined into a single transmitting/receiving antenna AFZM featuring the frequency dependence of the radiation patterns' maximums.

Digital data processing units are advantageously implemented by combination of the analogue-digital converters and field programmable gate arrays FPGA.

New solution described above removes numerous setbacks of the solution according to the patent CZ303331. In particular, it allows to perform multiple necessary functions simultaneously. It for instance allows to identify the threatening missile, calculate the direction of its approach and the presumed point-of-impact and subsequently to generate an actuation signal for the counter-missile activation. The advantages may also include the fact that it allows to achieve more precise generation of actuation signals. It mentions also a version where two antennas with different inclinations may be combined into a single antenna having the shape of thin vertically fixed stripe. Such solution takes up just very little space on the combat vehicle to be protected.

Similarly, the solution described above removes the majority of setbacks of the solution according to the article [PREMYSL HUDEC ET AL: "Microwave Radar Sensors for Active Defense Systems", RADAR CONFERENCE, 2009]. The new solution improves the capabilities of the simple microwave barrier, though it does not influence the operation or properties of other sensors used. Its core assets include simultaneous target identification and the generation of actuation signals, the determination of target elevation, and the generation of significantly more precise actuation signals. In conjunction with the segment radar, the dual microwave barrier works as an independent sensor providing signals and data which contribute to more reliable and precise protection of military vehicles.

Explanation of Drawings

Microwave system with enhanced capability to detect, identify and localize moving targets according to the presented solution will be hereinafter described by means of the attached drawings. Fig. 1 shows the dual microwave barrier in the horizontal plane and Fig. 2 shows it in the vertical plane. Fig. 3 shows the dual microwave barrier in the vertical plane with marked trajectory of the threatening missile. Fig. 4 shows two neighbouring segments of the dual microwave barrier projected in the horizontal plane. Block diagram of circuits that process signals from the dual microwave barrier is shown in Fig. 5. Fig. 6 will help to explain the signals processing procedure in the dual microwave barrier. Fig. 7 shows an example of the antenna AFZM radiation patterns. General scheme of the dual microwave barrier with these antennas in bistatic connection is shown in Fig. 8 and in monostatic connection in Fig. 9.

Detailed Description of the Preferred Embodiments

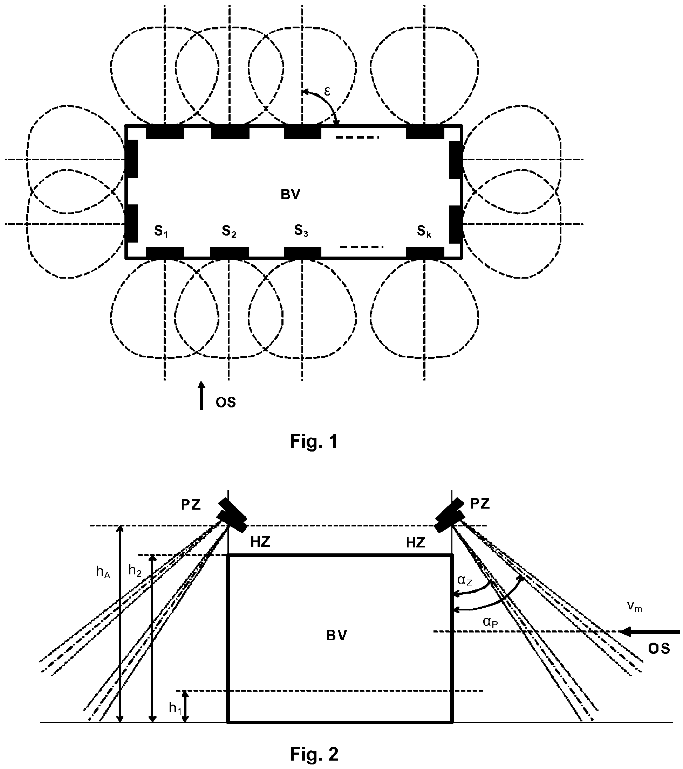

In order to solve the issues mentioned above, dual microwave barrier has been designed according to Fig. 1 and Fig. 2. Fig. 1 shows the design in the horizontal plane, it means the top view. In this view the dual microwave barrier is consistent with the simple microwave barrier according to the patent CZ303331, while the dual microwave barrier consists of one or more segments $S_1$ to $S_k$ that are also fixed around the perimeter of the combat vehicle $\underline{BV}$. Withal, the antennas' radiation patterns in the horizontal plane at this place form with the vehicle's side an angle $\underline{\varepsilon}$ ranging from 20° to 160°, its typical value is 90°.

Each segment $S_1$ to $S_k$ consists of two elementary microwave barriers, see Fig. 2. Elementary microwave barrier here means a simple microwave barrier according to the patent CZ303331 consisting of only one radar sensor equipped with the antenna system formed by one or two antennas with relevant radiation pattern or patterns. The first elementary microwave barrier forming one segment of dual microwave barrier works as the main microwave barrier $\underline{HZ}$ and the second works as the microwave pre-barrier $\underline{PZ}$.

Therefore, microwave system with enhanced capability to detect, identify and localize moving targets as seen from the main microwave barrier $\underline{HZ}$ point of view consists of at least one first radar sensor $RSZ_i$ equipped with the first antenna system $ASZ_i$. This first antenna system $ASZ_i$ is formed by the transmitting and receiving antennas or with common antenna for both the receiver and transmitter, which either are a part of the radar sensor $RSZ_i$, or they are connected to it by coaxial cable or cables. This first radar sensor $RSZ_i$ consists of the microwave transmitter $\underline{TXZ}$ and the microwave receiver $\underline{RXZ.}$ The first radar sensors $RSZ_i$ are sensors having at their analogue low-frequency or digital outputs the information about the amplitude of the received signal reflected from the missile and about the frequency equal to the Doppler shift of the received signal frequency relative to the transmitted signal frequency. Antennas of the first radar sensors $RSZ_i$ feature narrow radiation patterns in the vertical plane and wide in the horizontal plane and they are located above the protected part of the combat vehicle $\underline{BV}$ at height $h_a$ that is higher than the height $h_2$ of the protected part of the given combat vehicle $\underline{BV.}$ These antennas of the first radar sensors $RSZ_i$ are directed in such a way that their radiation patterns' axes in the vertical plane are inclined under the angle $\alpha_z$ ranging from 20° to 70° relative to the vertical line passing through the side of the $\underline{BV}$ vehicle's protected part in the place where the antennas of the given radar sensor $RSZ_i$ are located. Simultaneously, the radiation patterns' axes in the horizontal plane at this place form an angle $\underline{\varepsilon}$ with the vehicle's side ranging from 20° to 160°. The number and locations of the first radar sensors $RSZ_i$ above the protected part of the vehicle is selected such that the radiation patterns of their respective antennas in the horizontal plane partially overlap. Thus created setup forms the main microwave barriers $\underline{HZ}$ where the output of each first radar sensor $RSZ_i$ is connected either directly, if it is a digital output, or via corresponding A/D converter $A/D_i$, if it is an analogue low-frequency output, to digital processing unit $\underline{JDZ}$.

Each main microwave barrier $\underline{HZ}$ is complemented with microwave pre-barrier $\underline{PZ}$ formed by the second radar sensors $RSP_i$ equipped with the second antenna systems $ASP_i$ and each pair forms a dual microwave barrier. Antennas of the second radar sensors $RSP_i$ of the microwave pre-barrier $\underline{PZ}$ feature also the radiation patterns narrow in the vertical plane and wide in the horizontal plane and they are directed in such a way that the second antenna system $ASP_i$ radiation patterns' axes in the vertical plane are inclined under the angle $\alpha_p$ by 10° to 30° greater than the value of the angle $\alpha_z$, however always smaller than 90°. Simultaneously, the second antenna system $ASP_i$ radiation pattern's axes in the horizontal plane form with the $\underline{BV}$ combat vehicle's side also the angle $\underline{\varepsilon}$ ranging from 20° to 160°. The number and locations of segments created in this way above the protected part of the combat vehicle $\underline{BV}$ is selected such that the radiation patterns of their respective antennas in the horizontal plane partially overlap. Analogically as the outputs of all the first radar sensors $RSZ_i$ of the main microwave barrier $\underline{HZ}$, the outputs of all the second radar sensors $RSP_i$ of the microwave pre-barrier $\underline{PZ}$ are connected based on their characteristics either directly or via A/D converters $\underline{ADC}$ to the inputs of the data processing unit $\underline{JDZ,}$ which will be described below.

The space in front of the main microwave barrier $\underline{HZ}$ is monitored by the microwave pre-barrier $\underline{PZ}$ inclined towards the combat vehicle $\underline{BV}$ in angle $\alpha_P$. Typically, the angle $\alpha_Z$ ranges from 20° to 70°, typical value is 45°. The value of angle $\alpha_P$ is typically by 10° to 30° greater than the value of angle $\alpha_z$, however neither the value of $\alpha_P$, nor $\alpha_Z$ may exceed 90°, otherwise the benefits of dual microwave barrier for the purposes of active protection of combat vehicles are lost.

During its flight, the threatening missile $\underline{OS}$ is at first detected by the microwave pre-barrier $\underline{PZ}$ and if the antennas height $h_a$ above the vehicle is sufficiently high, the whole threatening missile may be allowed to fly through the radiation pattern of the microwave pre-barrier $\underline{PZ}$ antennas. Threatening missile is therefore detected with sufficient time reserve ahead allowing to perform its identification, determine its horizontal position, and possibly to calculate other parameters. Most of these functions may actually be performed simultaneously. For calculation of other parameters it is advantageous if the used radar sensors are capable of measuring the Doppler frequencies as well as instantaneous values of the target's distance. When dual microwave barrier is implemented, especially the following functions can be performed: target identification, precise generation of actuation signals and under certain conditions also the calculation of azimuth and elevation of the trajectory of the threatening missile OS.

When dual microwave pre-barrier PZ is implemented, for the target identification it is possible to allow the whole threatening missile OS fly through the space covered by the radiation patterns of the used antennas. This is not possible in case of very long missiles flying at the level $h_2$ nevertheless the identification can also be performed by negative definition meaning that very short targets will be identified, such that bullets from pistols or machine guns that must not trigger the active protection system's response. By analyzing the microwave pre-barrier PZ time records and spectrograms such very short targets may be identified with certainty and it is possible to set that the active protection system will ignore them.

The proposed dual microwave barrier allows also to achieve significantly more precise procedure of the actuating signals generation compared to single microwave barrier according to the patent CZ303331. As already mentioned above, the main issue is the dependence of the triggering threshold optimal value on the height of the threatening missile above the ground. Since the microwave antennas radiation patterns of the main microwave barrier HZ and the microwave pre-barrier PZ overlap to a certain extent, the above-mentioned issue may be solved by the dual microwave barrier described herein. In order to obtain optimal generation of actuating signals it is only necessary to set the condition of equal amplitudes of the signals:

$$A_p = A_z$$

where $A_p$ and $A_z$ are the instantaneous values of the envelope of filtered signals at the output of the microwave pre-barrier PZ and the main microwave barrier HZ. The set of *points* $A_p = A_z$ lies approximately in the center between the angles $\alpha_p$ and $\alpha_z$ and the condition is independent on the height of flight of the threatening missile OS above the ground. The actuation signals timing as opposed to the simple microwave barrier according to the patent CZ303331 is significantly better defined and more precise.

When dual microwave barrier is implemented the threatening missile OS is measured by two times more radar sensors, which allows to determine, based on their records, more parameters of the threatening missile than the single microwave barrier would allow. These options depend also on the capabilities of the used radar sensors because some measure only the Doppler signals and related radial parts of the threatening missiles velocity, other measure also the instantaneous values of the distance between the radar sensor and the threatening missile OS, and they further also depend on which parameters are known beforehand, for instance from the surveillance radar. The following text describes analysis based on the Doppler frequencies measurements; if instantaneous values of the distance between radar sensor and threatening missile were known, it is possible to derive similar equations.

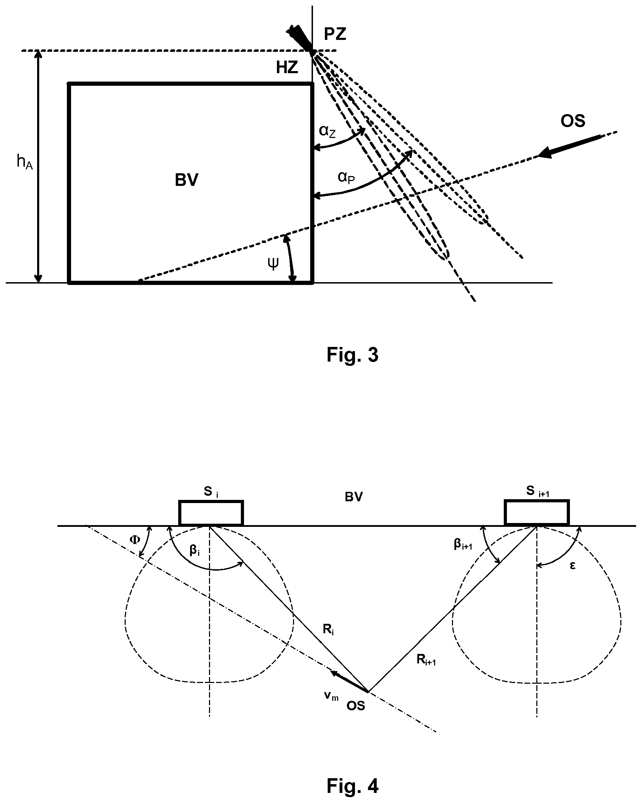

The solution may be divided to description in the vertical plane, side view, see Fig. 3, and description in the horizontal plane, top view, see Fig. 4. In the vertical plane is shown the microwave pre-barrier PZ radiation pattern making with the vertical side of the combat vehicle BV the angle $\alpha_p$ and the main microwave barrier HZ radiation pattern making with the combat vehicle BV the angle $\alpha_z$. Threatening missile OS approaches the combat vehicle BV with the velocity $v_m$ on the trajectory with elevation $\Psi$. Radar sensor connected to the microwave pre-barrier PZ operates at the frequency $f_p$, radar sensor connected to the main microwave barrier HZ operates on the frequency $f_z$ and given the very narrow radiation patterns of their antennas they will have at their outputs signals with Doppler frequencies $f_{dp}$ and $f_{dz}$. When the threatening missile OS flies directly perpendicular to the center of one segment $S_k$ of the dual microwave barrier when the angles are $\varepsilon = \pi/2$ and $\beta_p = \beta_z = \pi/2$, see Fig. 1 and Fig. 4, it is possible to define the following equations:

$$f_{dp} = \frac{2 f_p v_m \cos(\psi + \pi/2 - \alpha_p)}{c} \qquad (1)$$

$$f_{dz} = \frac{2 f_z v_m \cos(\psi + \pi/2 - \alpha_z)}{c} \qquad (2)$$

If the one knows the values of transmitted frequencies $f_p$ and $f_z$ and angles $\alpha_p$ and $\alpha_z$, it is possible to calculate the missile's velocity $v_m$ and value of elevation $\psi$.

Generally, one must consider that $\beta_p \neq \beta_z \neq \pi/2$. Then it is necessary to make simultaneously the analysis in the horizontal plane, top view, see Fig. 4.

Fig. 4 shows in the horizontal plane two neighbouring segments $S_i$ and $S_{i+1}$ of the dual microwave barrier, while the threatening missile OS approaches the combat vehicle BV with azimuth $\Phi$. For the i-th segment of the dual microwave barrier it is possible to define the equations for the output Doppler frequencies $f_{dpi}$ and $f_{dzi}$ :

$$f_{dpi} = \frac{2 f_p v_m \cos(\Psi + \pi/2 - \alpha_p) \cos(\pi - \Phi - \beta_{pi})}{c} \tag{3}$$

$$f_{dzi} = \frac{2 f_z v_m \cos(\Psi + \pi/2 - \alpha_p) \cos(\pi - \Phi - \beta_{zi})}{c} \tag{4}$$

In these equations the angles $\beta_{pi}$ and $\beta_{zi}$ in the plane $\beta$ correspond to the momentary positions of the threatening missile OS in planes of maximums of the radiation patterns of antennas of the microwave pre-barrier PZ and the main microwave barrier HZ.

Equations defined above can be easily solved only if the following applies $\Phi = \beta_{pi} = \beta_{zi} = \pi/2$ when they transfer to equations (1) and (2) and the values of $v_m$ and $\Psi$ may be easily calculated. Otherwise, they contain other unknowns $\Phi$, $\beta_{pi}$ and $\beta_{zi}$. In order to determine all the unknowns it is necessary to exploit measurements from more neighbouring segments $S_k$ of the dual microwave barrier, use the measurements of distance between radar sensor and threatening missile if they are available or to exploit measurements of certain parameters from other sensors, such as measurements of azimuth from the surveillance radar.

When calculating the parameters of the threatening missile OS it is necessary to consider that some input parameters cannot be determined with absolute precision and that the calculated parameters may be distorted by such errors that the results may not be usable in practice. This applies in particular to measurements of Doppler frequencies $f_{dpi}$ and $f_{dzi}$ that are usually obtained from measured records of radar sensors by means of fast Fourier transformation FFT. Accuracy of the Doppler frequencies determination depends directly proportionately on the time allowed for the record's samples integration. For very fast flying missiles the integration time is always limited and therefore the accuracy of the $f_{dpi}$ and $f_{dzi}$ determination is limited accordingly. The options how to calculate parameters of threatening missiles OS thus must be solved for specific configuration of the active protection system, it is always necessary to perform the comprehensive analysis of errors. However, the proposed concept of dual microwave barrier allows to perform the calculations described above.

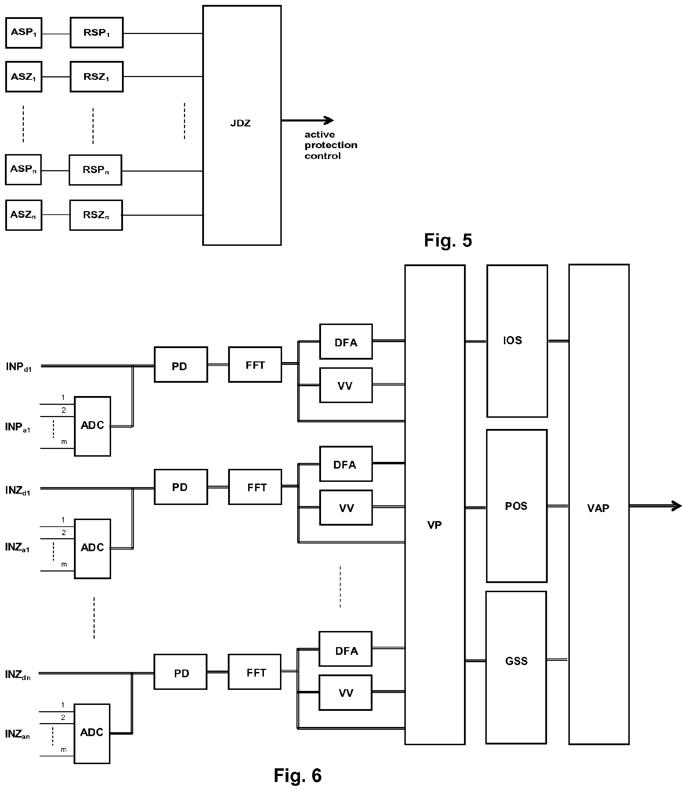

Fig. 5 shows the block diagram of circuits for processing the signals of the above-mentioned setup of dual microwave barrier.

As already mentioned-above, each segment of the dual microwave barrier consists of two radar sensors, it means from the first radar sensor $RSZ_i$, which is part of the main microwave barrier HZ, and the second radar sensor $RSP_i$, which is part of the microwave pre-barrier PZ. In this case, both the microwave pre-barriers PZ and the microwave barriers HZ use one or two separate antennas depending on what types of radar sensors are used. It can be monostatic radars that combine the transmitted and received signals of the radar sensor into single antenna. If bistatic radars are used, two antennas are connected to each radar sensor that is one separate antenna for transmitted signals and one separate antenna for received signals. Each microwave pre-barrier PZ of the i-th segment $S_i$ contains the second antenna system $ASP_i$, which according to the above-mentioned description may consist of one or two separate antennas. Analogically, each main microwave barrier HZ of the i-th segment $S_i$ contains the first antenna system $ASZ_i$, which consists of one or two separate antennas. To each second antenna system $ASP_i$ is connected the i-th radar sensor $RSP_i$ of the microwave pre-barrier PZ, to each first antenna system $ASZ_i$ is connected the i-th radar sensor $RSZ_i$ of the main microwave barrier HZ. The second antenna system $ASP_i$ of the microwave pre-barrier PZ, the first antenna system $ASZ_i$ of the main microwave barrier HZ, along with the radar sensor $RSP_i$ of the microwave pre-barrier PZ and the radar sensor $RSZ_i$ of the main microwave barrier HZ form one segment of the dual microwave barrier. The perimeter of the combat vehicle BV is covered by the setup of n such segments. Outputs of all the second radar sensors $RSP_i$ of the microwave pre-barrier PZ as well as the first radar sensors $RSZ_i$ of the main microwave barrier HZ are connected to the inputs of the digital processing unit JDZ. If the outputs of the second radar sensors $RSP_i$ of the microwave pre-barrier PZ and the first radar sensors $RSZ_i$ of the main microwave barrier HZ are analogue, the analogue inputs of the digital processing unit JDZ are used that are equipped with A/D converters ADC. If the outputs of the used radar sensors are digital, the digital data inputs of the data processing unit JDZ are used.

Fig. 6 shows the signal processing procedure in the digital processing units JDZ. Their inputs may be either digital or analogue. Digital data inputs $INP_{di}$ of microwave pre-barriers PZ and digital data inputs $INZ_{di}$ of main microwave barriers HZ are connected directly to other data processing circuits. Signals from m possible analogue outputs of the second radar sensors $RSP_i$ of the microwave pre-barriers PZ as well as the main microwave barriers HZ are at first processed by the analogue-digital conversion in the A/D converters ADC. Data from the radar sensors in digital form are further processed in the data preparation blocks PD, which usually perform decimation, interpolation or filtering. These data preparation blocks are followed by the fast Fourier transformation blocks FFT that perform spectral analysis.

Data calculated here are used in the Doppler frequencies and amplitudes blocks DFA for calculation of the relevant Doppler frequencies and amplitudes of the signals. In parallel, the distance calculation blocks VV perform the calculation of instantaneous values of distance between the radar sensor and threatening missile, this is made in case when the data from the radar sensors this will allow. All data described above, from all radar sensors, are brought to the buffer memory VP, which for the subsequent calculations records at first the data from the microwave pre-barriers PZ and then from the microwave barriers HZ. The next software block called threatening missiles identification block IOS performs identification of the missiles captured by the radar sensors. In parallel, the software block POS calculates other parameters of the threatening missiles and the software block GGS of the actuating signals generation generates the signals for activation of counter-missiles. If based on the calculations described above and performed by the assessment and counter-missile activation block VAP the software system of the given dual microwave barrier assesses that a threatening missile OS flies towards the combat vehicle BV, it will fire a counter-missile at a suitable moment and in the suitable direction.

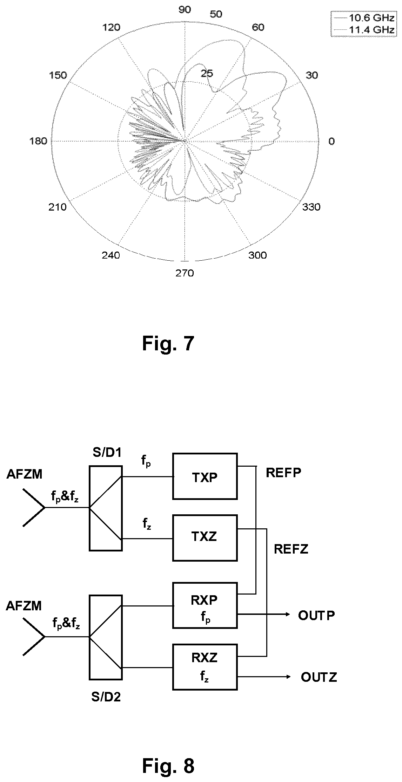

Certain setback of the solution described above is that the antenna systems $ASP_i$ of the microwave pre-barriers PZ and the antenna systems $ASZ_i$ of the main microwave barriers HZ when compared to the single microwave barrier are doubled and take up on the combat vehicle BV more space, which in some applications may be problematic. Therefore, in one preferred embodiment these two antenna systems may be combined into one provided that special antennas AFZM with frequency-dependent maximums of the radiation patterns are used. With this type of antennas the angle of maximum radiation depends on the operating frequency, see Fig. 7. If in connection with these antennas two radar sensors operating at two different suitable frequencies are also combined, the complete system acts as a dual microwave barrier according to the Fig. 2, while using only half the number of antennas. General block diagram of such setup for bistatic structure of used radar sensors is shown in Fig. 8. The connection uses two antennas AFZM with frequency-dependent maximums of radiation patterns and two radar sensors consisting of the transmitters operating at two different frequencies. Simultaneously, the transmitter TXP of the microwave pre-barrier PZ and the receiver RXP of the microwave pre-barrier PZ operate at the frequency $f_p$ and the transmitter TXZ of the main microwave barrier HZ and the receiver PXZ of the main microwave barrier HZ operate at the frequency $f_z$. Since the receivers of the radar sensors use coherent processing, from the transmitter TXP of the microwave pre-barrier PZ to the receiver RXP of the microwave pre-barrier PZ is led the reference signal REFP with the frequency $f_p$ and from the transmitter TXZ of the main microwave barrier HZ to the receiver RXZ of the main microwave barrier HZ is led the reference signal REFZ with the frequency $f_z$. Signals from the transmitter TXP of the microwave pre-barrier PZ and the transmitter TXZ of the main microwave barrier HZ operating at frequencies $f_p$ and $f_z$ are combined by the first combining/splitting circuit S/D1 into one transmitting antenna AFZM with frequency dependent maximums of radiation patterns. This antenna is designed in such a way that at the frequency $f_p$ the maximum of the radiation pattern is directed in direction needed for the microwave pre-barrier PZ and at the frequency $f_z$ the maximum of the radiation pattern is directed in direction needed for the main microwave barrier HZ.

Receiving antenna AFZM with frequency dependent maximums of the radiation patterns features the same properties. The output of the receiving antennas is split by the second combining/splitting circuit S/D2 to inputs of receivers, while the receiver RXP of the microwave pre-barrier PZ operates at the frequency $f_p$ and has at its output the output signals OUTP of the microwave pre-barrier PZ and the receiver RXZ of the main microwave barrier HZ operates at the frequency $f_z$ and has at its output the signals OUTZ of the main microwave barrier HZ. This all requires only a single transmitting and a single receiving antennas, while these antennas may be implemented by vertically fixed and relatively narrow oblong stripes. As such, they take up significantly less space on the combat vehicle BV than in total four individually inclined antennas as in the standard design of the dual microwave barrier.

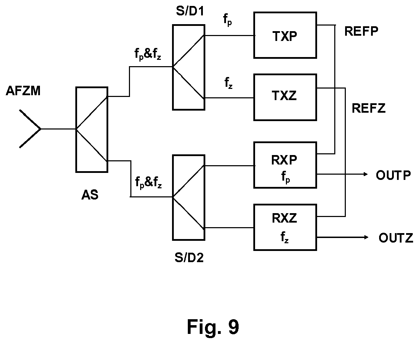

Fig. 9 shows the block diagram of dual microwave barrier with antennas AFZM with frequency dependent maximums of the radiation patterns in monostatic connection. By contrast to the design with bistatic radar sensors according to Fig. 8 this connection uses the antenna combining element AS, which combines the output of the transmitting block and the input of the receiving block into a single antenna. The advantage of monostatic radars is that they need half the number of antennas, the setback is usually significantly lower separation between the transmitting and receiving block, which often results in lower transmitted power and shorter range.

Industrial Applicability

Microwave dual barrier may be used in active protection systems of combat vehicles or other objects, in particular for detection and measurements of threatening armor-piercing missiles, determination of their horizontal position in relation to the protected vehicle, for generation of actuation signals that will activate suitable counter-missile or counter-missiles, or for the threatening missile identification. The invention may also be used for monitoring the movements of objects in the vicinity of other objects that shall be protected.

**Claims**

1.  Microwave system with enhanced capability to detect, identify and localize moving targets that has a main microwave barrier (HZ) formed by at least one first radar sensor (RSZ$_i$) equipped with a first antenna system (ASZ$_i$) formed by transmitting and receiving antennas or by a common antenna for both the receiver and transmitter, and where this first radar sensor (RSZ$_i$) consists of a microwave transmitter (TXZ) and a microwave receiver (RXZ), while antennas of the first radar sensor (RSZ$_i$) have narrow radiation patterns in the vertical plane and wide radiation patterns in the horizontal plane and they are located above the protected part of a combat vehicle (BV) at a height (h$_a$) that is higher than the height (h$_2$) of the protected part of the given combat vehicle (BV) and they are directed in such a way that their antennas radiation pattern axes in the vertical plane are inclined under an angle ($\alpha_z$) ranging from 20° to 70° relative to the vertical line passing through the side of the combat vehicle (BV) protected part in the place where the antennas of the said first radar sensor (RSZ$_i$) are located, and simultaneously the antennas radiation pattern axes in the horizontal plane at this place form an angle ($\varepsilon$) with the combat vehicle (BV) side ranging from 20° to 160°, while the number and locations of the first radar sensors (RSZ$_i$) is selected such that the radiation patterns of their respective antennas in the horizontal plane partially overlap, and the output of each first radar sensor (RSZ$_i$) is connected either directly, if it is a digital output, or via corresponding A/D converter (A/D$_i$), if it is an analogue low-frequency output, to the digital processing unit (JDZ) **characterized by the fact that** the main microwave barrier (HZ) is complemented with a microwave pre-barrier (PZ) formed by second radar sensors (RSP$_i$) equipped with second antenna systems (ASP$_i$) and each first and second radar pair forms a dual microwave barrier where the antennas of the second radar sensors (RSP$_i$) of the microwave pre-barrier (PZ) feature also the radiation patterns narrow in the vertical plane and wide in the horizontal plane and are directed in such a way that the axes of the second antenna system (ASP$_i$) radiation patterns in the vertical plane are inclined under an angle ($\alpha_p$) which is 10° to 30° greater than the value of the angle ($\alpha_z$), however always smaller than 90°, and simultaneously the axes of the radiation patterns of the second antenna system (ASP$_i$) in the horizontal plane form with the combat vehicle (BV) side also the angle ($\varepsilon$) ranging from 20° to 160°, while the number and locations of segments created in this way above the protected part of the combat vehicle (BV) is selected such that the radiation patterns of their respective antennas in the horizontal plane partially overlap, the outputs of all the second radar sensors (RSP$_i$) of the microwave pre-barrier (PZ) are connected analogically as the outputs of all the first radar sensors (RSZ$_i$) of the main microwave barrier (HZ) based on their characteristics either directly, or via A/D converters (ADC) to the inputs of the data processing unit (JDZ), where this data processing unit (JDZ) is at its input formed by chains of software blocks where the number of these chains corresponds to the double number of segments formed by the main microwave barrier (HZ) and the microwave pre-barrier (PZ), and which consists of the data preparation block (PD) followed by the fast Fourier transformation block (FFT), output of which is connected to the buffer memory (VP) both directly, also via the Doppler frequencies and amplitudes block (DFA), and also via the distance calculation block (VV), and this buffer memory (VP) is connected in parallel via the software block of the threatening missiles identification (IOS), the software block of the threatening missiles parameters calculation (POS) and the software block of the actuation signals generation (GGS) connected to the assessment and counter-missile activation block (VAP).

2.  Microwave system according to claim 1 **characterized by the fact that** the radiation patterns axes of the first antenna system (ASZ$_i$) in the vertical plane are inclined under the angle ($\alpha_z$) of 45° relative to the vertical line passing through the side of the vehicle's protected part in the place where the antenna of the given radar sensor (RSZ$_i$) is located, and simultaneously the axes of the horizontal radiation patterns of antennas of both the main microwave barrier (HZ) and the microwave pre-barrier (PZ) at this place form with the vehicle's side an angle $\varepsilon$ =90°.

3.  Microwave system according to claim 1 or 2 **characterized by the fact that** the microwave transmitter (TXP) and receiver (RXP) of the microwave pre-barrier (PZ) have the operating frequency (f$_p$) and the microwave transmitter (TXZ) and receiver (RXZ) of the main microwave barrier (HZ) have operating frequency (f$_z$) different from the frequency (fp), while the outputs of the transmitter (TXP) of the microwave pre-barrier (PZ) and the transmitter (TXZ) of the main microwave barrier (HZ) are combined via the first combining/splitting circuit (S/D1) into a single transmitting antenna (AFZM) with frequency dependent maximums of radiation patterns, and the inputs of the receiver (RXP) of the microwave pre-barrier (PZ) and the receiver (RXZ) of the main microwave barrier (HZ) are connected to the outputs of the second combining/splitting circuit (S/D2), the output of which is connected to the single receiving antenna (AFZM) with frequency dependent maximums of the radiation patterns.

4.  Microwave system according to claim 3 **characterized by the fact that** the output of the first combining/splitting circuit (S/D1) of the transmitting block and the input of the second combining/splitting circuit (S/D2) of the receiving block are via the antenna combiner (AS) combined into a single transmitting/receiving antenna (AFZM) with frequency dependent maximums of the radiation patterns.

**5.** Microwave system according to any of claims 1 to 4 **characterized by the fact that** the digital data processing units (JDZ) are realized by combination of analogue-digital converters and field programmable gate arrays FPGA.

**Patentansprüche**

**1.** Das Mikrowellen-System mit der erweiterten Fähigkeit, die sich bewegenden Ziele zu erkennen, identifizieren und lokalisieren, das über eine Mikrowellen-Hauptschranke (HZ) verfügt, die mindestens aus einem ersten Radarsensor $(RSZ_i)$ besteht, der mit dem ersten Antennensystem $(ASZ_i)$ versehen ist, bestehend aus der Sende- und der Empfangsantenne oder einer gemeinsamen Antenne für den Sender und den Empfänger, und wo dieser erste Radarsensor $(RSZ_i)$ aus einem Mikrowellen-Sender (TXZ), sowie aus einem Mikrowellen-Empfänger (RXZ) zusammengesetzt ist, wo die Antennen des ersten Radarsensors $(RSZ_i)$ auf der vertikalen Ebene über enge Feldstärkediagramme und auf der horizontalen Ebene über breite Feldstärkediagramme verfügen und sich oberhalb des geschützten Bereiches eines Kampfwagens (BV) in der Höhe $(h_a)$ befinden, die grösser als die Höhe $(h_2)$ des geschützten Bereiches des jeweiligen Kampfwagens ist (BV) und so orientiert sind, dass die Achsen der Feldstärkediagramme der jeweiligen Antennen in der vertikalen Ebene im Winkel $(\alpha_z)$ im Bereich von 20° bis 70° zur durch die Wand des geschützten Bereiches des Kampfwagens (BV) durchgehenden Vertikale im Punkt geneigt sind, in dem sich die Antennen des jeweiligen ersten Radarsensors $(RSZ_i)$ befinden und gleichzeitig die Achsen der Feldstärkediagramme der jeweiligen Antennen in der horizontalen Ebene mit der Wand des Kampfwagens (BV) einen Winkel $(\varepsilon)$ im Bereich von 20° bis 160° in diesem Punkt einschließen, wobei die Anzahl, sowie die Anordnung der ersten Radarsensoren $(RSZ_i)$ so gewählt sind, dass sich die Feldstärkediagramme der zu diesen zugehörigen Antennen in der horizontalen Ebene teilweise überdecken und der Ausgang jedes ersten Radarsensors $(RSZ_i)$ ist im Falle, wenn dieser digital ist, direkt, und im Falle, wenn es sich um einen Analog-Niederfrequenzausgang handelt, dann über den entsprechenden A/D-Wandler $(A/D_i)$ an die Einheit für Digitalverarbeitung (JDZ) angeschlossen, **dadurch gekennzeichnet, dass** jede Mikrowellen-Hauptschranke (HZ) durch eine Mikrowellen-Vorschranke (PZ) ergänzt ist, bestehend aus den zweiten Radarsensoren $(RSP_i)$, die mit den zweiten Antennensystemen $(ASP_i)$ versehen sind und jedes Paar bildet eine doppelte Mikrowellen-Schranke, wo die Antennen der zweiten Radarsensoren $(RSP_i)$ der Mikrowellen-Vorschranke (PZ) ebenfalls auf der vertikalen Ebene über enge Feldstärkediagramme und auf der horizontalen Ebene über breite Feldstärkediagramme verfügen und so orientiert sind, dass die Achsen der Feldstärkediagramme der Antennen des zweiten Antennensystems $(ASP_i)$ in der vertikalen Ebene in einem Winkel $(\alpha_p)$ geneigt sind, der um 10° bis 30° grösser als der Winkelwert $(\alpha_z)$, jedoch immer kleiner als 90° ist, und gleichzeitig die Achsen der Feldstärkediagramme der Antennen des zweiten Antennensystems $(ASP_i)$ in der horizontalen Ebene mit der Wand des Kampfwagens (BV) ebenfalls einen Winkel $(\varepsilon)$ im Bereich von 20° bis 160° einschließen, wobei die Anzahl, sowie die Anordnung der auf diese Art gebildeten Segmente oberhalb des geschützten Bereiches eines Kampfwagens (BV) so gewählt sind, dass sich die Feldstärkediagramme der jeweiligen Antennen in der horizontalen Ebene teilweise überdecken, die Ausgänge aller zweiten Radarsensoren $(RSP_i)$ der Mikrowellen-Vorschranke (PZ) sind analog wie die Ausgänge aller ersten Radarsensoren $(RSZ_i)$ der Mikrowellen-Hauptschranke (HZ) nach deren Natur entweder direkt, oder über A/D-Wandler (ADC) an die Eingänge der Einheit (JDZ) für Datenverarbeitung angeschlossen, wo diese Einheit (JDZ) für Datenverarbeitung an ihrem Eingang aus den Ketten besteht, deren Anzahl dem Zweifachen der Segmente entspricht, die durch die Mikröwellen-Hauptschranke (HZ), sowie Mikrowellen-Vorschranke (PZ) gebildet sind, und die aus einem Block (PD) für Datenbereitstellung bestehen, an die die Blöcke (FFT) für schnelle Fouriertransformation anknüpfen, deren Ausgang mit dem Pufferspeicher (VP) einerseits direkt, andererseits über den Block (DFA) der Dopplerfrequenzen und -amplituden und andererseits über den Block (VV) für die Abstandsberechnung verbunden ist und dieser Pufferspeicher (VP) ist weiter über die parallel angeschlossenen Blöcke, und zwar Programmblock (IOS) für die Identifizierung der bedrohenden Geschosse, Programmblock (POS) für die Berechnung der Parameter der bedrohenden Geschosse und Programmblock (GGS) für die Erzeugung der Startsignale mit dem Block (VAP) für die Bewertung und die Aktivierung eines Gegengeschosses verbunden.

**2.** Das Mikrowellen-System nach dem Anspruch 1 **dadurch gekennzeichnet, dass** die Achsen der Feldstärkediagramme der Antennen des ersten Antennensystems $(ASZ_i)$ in der vertikalen Ebene im Winkel $(\alpha_z)$ 45° zur durch die Wand des geschützten Bereiches des Wagens durchgehenden Vertikale im Punkt geneigt sind, in dem sich die Antenne des jeweiligen Radarsensors $(RSZ_i)$ befindet und gleichzeitig die Achsen der horizontalen Feldstärkediagramme der Antennen der Mikrowellen-Hauptschranke (HZ), sowie der Mikrowellen-Vorschranke (PZ) mit der Wand des Wagens in diesem Punkt einen Winkel $\varepsilon$ = 90° einschließen.

**3.** Das Mikrowellen-System nach dem Anspruch 1 oder 2 **dadurch gekennzeichnet, dass** der Mikröwellen-Sender (TXP), sowie -Empfäger (RXP) der Mikrowellen-Vorschranke (PZ) über eine Arbeitsfrequenz $(f_p)$ verfügen und der

Mikrowellen-Sender (TXZ), sowie -Empfänger (RXZ) der Mikrowellen-Hauptschranke (HZ) über eine Arbeitsfrequenz ($f_Z$) verfügen, die von der Frequenz (fp) unterschiedlich ist, wobei die Ausgänge des Senders (TXP) der Mikrowellen-Vorschranke (PZ) und des Senders (TXZ) der Mikrowellen-Hauptschranke (HZ) über die erste Verknüpfungs-/Trennschaltung (S/D1) in die einzige Sendeantenne (AFZM) mit der Frequenzabhängigkeit der Maxima der Feldstärkediagramme vereinigt sind und die Eingänge des Empfängers (RXP) der Mikrowellen-Vorschranke (PZ) und des Empfängers (RXZ) der Mikrowellen-Hauptschranke (HZ) mit den Ausgängen der zweiten Verknüpfungs-/Trennschältung (S/D2) verbunden sind, die durch ihren Eingang an die einzige Empfangsantenne (AFZM) mit der Frequenzabhängigkeit der Maxima der Feldstärkediagramme angeschlossen ist.

4. Das Mikrowellen-System nach dem Anspruch 3 **dadurch gekennzeichnet, dass** der Ausgang der ersten Verknüpfungs-/Trennschaltung (S/D1) des Sendeblockes und der Ausgang der zweiten Verknüpfungs-/Trennschaltung (S/D2) des Empfangsblockes über eine Antennen-Verknüpfungseinheit (AS) in die einzige Sende/Empfangsantenne (AFZM) mit der Frequenzabhängigkeit der Maxima der Feldstärkediagramme vereinigt sind.

5. Das Mikrowellen-System nach jedwedem der Ansprüche 1 bis 4 **dadurch gekennzeichnet, dass** die Einheiten (JDZ) für Digitalverarbeitung der Daten durch Zusammenschaltung der Analog-Digitalwandler und der programmierbaren Schaltkreise FPGA ausgeführt sind.

**Revendications**

1. Système à micro-ondes à capacité améliorée pour la détection, identification et localisation des cibles mouvantes ayant une barrière à micro-ondes principale (HZ) faite par au moins un premier capteur radar ($RSZ_i$) équipé d'un premier système d'antenne ($ASZ_i$) fait par des antennes d'émission et dé réception ou par une antenne commune pour les deux l'émetteur et le récepteur et où ce premier capteur radar ($RSZ_i$) est composé d'un émetteur à micro-ondes (TXZ) et d'un récepteur à micro-ondes (RXZ), où les antennes du premier capteur radar ($RSZ_i$) ont des diagrammes d'émission étroits dans le plan vertical et des diagrammes d'émission larges dans le plan horizontal et sont situées au-dessus de la partie protégée d'un véhicule de combat (BV) à la hauteur ($h_a$), qui est supérieure à la hauteur ($h_2$) de la partie protégée du véhicule de combat donné (BV) et orientées de telle façon que les axes des diagrammes d'émission des antennes soient dans le plan vertical inclinés sous un angle ($\alpha_z$) dans l'intervalle de 20° à 70° par rapport à la verticale qui passe par le côté de la partie protégée du véhicule de combat (BV) à l'endroit où les antennes du premier capteur radar donné ($RSZ_i$) sont placées et en même temps, à cet endroit, l'angle ($\varepsilon$) entre les axes des diagrammes d'émission des antennes dans le plan horizontal et le côté du véhicule de combat (BV) est dans l'intervalle de 20° à 160°, où le nombre et la disposition des premiers capteurs radars ($RSZ_i$) sont choisis de telle façon que les diagrammes d'émission des antennes correspondantes se recouvrent partiellement dans le plan horizontal et la sortie du chaque premier capteur radar ($RSZ_i$) est connectée directement, si elle est numérique, et via le convertisseur A/D ($A/D_i$) correspondant, si elle est analogique à basse fréquence, à l'unité (JDZ) de traitement numérique **dont la caractéristique essentielle est que** chaque barrière à micro-ondes principale (HZ) est complétée par une pré-barrière à micro-ondes (PZ) faite par les deuxièmes capteurs radars ($RSP_i$) équipés des deuxièmes systèmes d'antenne ($ASP_i$) et chaque paire forme une double barrière à micro-ondes, où les antennes des deuxièmes capteurs radars ($RSP_i$) de la pré-barrière à micro-ondes (PZ) ont également les diagrammes d'émission étroits dans le plan vertical et des diagrammes d'émission larges dans le plan horizontal et sont orientées de telle façon que les axes des diagrammes d'émission des antennes du deuxième système d'antenne ($ASP_i$) sont dans le plan vertical inclinés sous un angle ($\alpha_p$) qui est supérieur de 10° à 30° à la valeur de l'angle ($\alpha_z$), mais toujours inférieur à 90°, et en même temps l'angle ($\varepsilon$) dans le plan horizontal entre les axes des diagrammes d'émission des antennes du deuxième système d'antenne ($ASP_i$) et le côté du véhicule de combat (BV) et aussi dans l'intervalle de 20° à 160°, où le nombre et la disposition des segments ainsi créés au-dessus de la partie protégée du véhicule de combat (BV) sont choisis de telle façon que les diagrammes d'émission des antennes correspondantes dans le plan horizontal se recouvrent partiellement, les sorties de tous les deuxièmes capteurs radars ($RSP_i$) de la pré-barrière à micro-ondes (PZ) sont connectées aux entrées de l'unité (JDZ) de traitement numérique analogiquement comme les sorties de tous les premiers capteurs radar ($RSZ_i$) de la barrière à micro-ondes principale (HZ) selon leur qualité directement ou via les convertisseurs A/D (ADC), où cette unité (JDZ) de traitement numérique est à son entrée faite par des chaînes, dont le nombre correspond au double nombre de segments faits par la barrière à micro-ondes principale (HZ) et par la pré-barrière à micro-ondes (PZ), et qui consistent d'un bloc (PD) de préparation des données, qui est suivi par des blocs (FFT) de transformation de Fourier rapide, dont les sorties sont connectées à la mémoire tampon (VP) directement, ou par un bloc (DFA) des fréquences et amplitudes de Doppler ou par un bloc (VV) de calcul des distances, et cette mémoire tampon (VP) est, via des blocs connectés parallèlement, c'est-à-dire via un bloc logiciel (IOS) d'identification des missiles menaçant, un bloc logiciel (POS) de calcul des paramètres des missiles menaçant et un bloc logiciel (GGS) de génération des signaux d'activation, interconnectée avec un bloc (VAP) d'évaluation et d'activation de la contre-missile.

2. Système à micro-ondes selon la revendication 1 **dont la caractéristique essentielle est que** les axes des diagrammes d'émission des antennes du premier système d'antenne ($ASZ_i$) sont dans le plan vertical inclinés sous un angle de ($\alpha_z$) 45° par rapport à la verticale qui passe par le côté de la partie protégée du véhicule à l'endroit où l'antenne du capteur radar donné ($RSZ_i$) est placée et en même temps, à cet endroit, l'angle $\varepsilon$ entre les axes des diagrammes d'émission horizontaux des antennes de la première barrière à micro-ondes principale (HZ) ainsi que de la pré-barrière à micro-ondes (PZ) et le côté du véhicule est de $\varepsilon$ = 90°.

3. Système à micro-ondes selon les revendications 1 ou 2 **dont la caractéristique essentielle est que** l'émetteur à micro-ondes (TXP) et le récepteur à micro-ondes (RXP) de la pré-barrière à micro-ondes (PZ) ont la fréquence de service ($f_p$) et l'émetteur à micro-ondes (TXZ) et le récepteur à micro-ondes (RXZ) de la barrière à micro-ondes principale (HZ) ont la fréquence de service ($f_z$) différente de la fréquence ($f_p$), où les sorties de l'émetteur (TXP) de la pré-barrière à micro-ondes (PZ) et de l'émetteur. (TXZ) de la barrière à micro-ondes principale (HZ) sont combinées via le premier circuit combineur/diviseur (S/D1) dans une seule antenne d'émission (AFZM) avec les maximums des diagrammes d'émission dépendant de la fréquence et les entrées du récepteur (RXP) de la pré-barrière à micro-ondes (PZ) et du récepteur (RXZ) de la barrière à micro-ondes principale (HZ) sont connectées aux sorties du deuxième circuit combineur/diviseur (S/D2) connecté par son entrée à une seule antenne de réception (AFZM) avec les maximums des diagrammes d'émission dépendant de la fréquence.

4. Système à micro-ondes selon la revendication 3 **dont la caractéristique essentielle est que** la sortie du premier circuit combineur/diviseur (S/D1) du bloc d'émission et la sortie du deuxième circuit combineur/diviseur (S/D2) du bloc de réception sont via un combineur d'antenne (AS) combinées dans une seule antenne d'émission/transmission (AFZM) avec les maximums des diagrammes d'émission dépendant de la fréquence.

5. Système à micro-ondes selon n'importe quelle des revendications 1 à 4 **dont la caractéristique essentielle est que** les unités (JDZ) de traitement numérique sont réalisées par la combinaison des convertisseurs analogique/numérique et des portes logiques programmables FPGA.

**Fig. 1**

**Fig. 2**

**Fig. 3**

**Fig. 4**

**Fig. 5**

active
protection
control

**Fig. 6**

**Fig. 7**

**Fig. 8**

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CZ 303331

**Non-patent literature cited in the description**

- **PREMYSL HUDEC et al.** Microwave Radar Sensors for Active Defense Systems. *RADAR CONFERENCE,* 2009